# EUROPÄISCHE PATENTSCHRIFT

(11) **EP 2 184 754 B1**
(45) Veröffentlichungstag und Bekanntmachung des Hinweises auf die Patenterteilung: **08.08.2012**
(21) Anmeldenummer: 09013775.3
(22) Anmeldetag: 03.11.2009
(51) Int. Cl.: H01H 25/00, B60N 2/02

(54) **Schalter**
Switch
Interrupteur

(30) Priorität: 10.11.2008 DE 102008056566
(43) Veröffentlichungstag der Anmeldung: 12.05.2010
(73) Patentinhaber: RAFI GmbH & Co. KG, 88276 Berg (DE)
(72) Erfinder: Beil, Theo, 88605 Messkirch (DE); Siegler, Ralf, 88281 Schlier (DE); Müller, Axel, 88276 Berg (DE)
(74) Vertreter: Engelhardt, Volker

(56) Entgegenhaltungen:
- EP-A1- 1 258 895
- FR-A1- 2 761 021
- US-B1- 6 765 165

## Beschreibung

Die Erfindung bezieht sich auf einen Schalter zur Umwandlung von mechanisch erzeugten Bewegungen in elektrische Schaltsignale nach dem Oberbegriff des Patentanspruches 1.

Solche Schalter werden oftmals in Kraftfahrzeugen beispielsweise als Fensterheber oder zur Sitzverstellung, eingesetzt. Üblicherweise ist das Schaltglied, das an einem Bolzen in dem Deckel des Schalters gehalten ist, in zwei Positionen verschwenkbar, so dass zwei unterschiedliche Schaltsignale erzeugt werden können. Wenn somit das Schaltglied nach vorne gedrückt wird, wird die Sitzfläche in Richtung des Lenkrades, bzw. wenn das Schaltglied nach hinten gedrückt wird, wird die Sitzfläche in Richtung der Rücksitzbank verfahren.

Als nachteilig bei diesen Schaltern hat sich herausgestellt, dass für jede Bewegungsrichtung ein Schalter vorzusehen ist. Da jedoch die Sitzeinstellung an die individuellen Gegebenheiten anzupassen ist, ist nicht nur der Abstand zwischen der Sitzfläche und dem Lenkrad einzustellen, sondern auch die Neigung der Rückenlehne, die Auswölbung der Rückenlehne, die Neigung der Sitzfläche, bezogen auf die horizontale Ebene sowie die Höhe, die die Sitzfläche vom Fahrzeugboden aufweisen soll.

Darüber hinaus können die bekannten Schalter lediglich in zwei Schaltpositionen, nämlich nach vorne und nach hinten, gedrückt oder verfahren werden. Die Bewegungsrichtung des Schaltgliedes entspricht dabei oftmals nicht der tatsächlichen Bewegungsrichtung des einzustellenden Sitzes, so dass die Benutzer derartiger Schalter durch Ausprobieren feststellen müssen, welche Schaltrichtung der gewünschten Bewegungsrichtung des einzustellenden Sitzes entspricht.

Aufgrund der Vielzahl der vorzusehenden Schalter ist deren Bedienung unübersichtlich und führt oftmals bei den Benutzern zu erheblichen Verwirrungen bis diese herausgefunden haben, welche Schalter für welche Bewegungsrichtung der Sitzposition zu betätigen sind.

Aus der EP 1258895 A1 ist eine Membranschaltung bekannt geworden, die aus einem axial verschieblichen Schaltglied besteht, das an einer Trägerplatte geführt gehalten ist. Das Schaltglied kann aus der Ausgangsposition in verschiedene Schaltstellungen überführt sein, um in der Trägerplatte angeordnete Drucktaster zu betätigen, durch die ein elektrisches Schaltsignal generiert ist.

Aufgrund der flexiblen Lagerung des Schaltgliedes, das nämlich mittels einer Membrane an der Trägerplatte gehalten ist, kann dieses um seinen Mittelpunkt verschwenkt sein, um die Drucktaster zu betätigen.

Als nachteilig bei diesem Stand der Technik hat sich herausgestellt, dass die Bewegungen des Schaltgliedes räumlich sehr klein bemessen sind, denn die flexible Lagerung des Schaltgliedes an der Trägerplatte ermöglicht ausschließlich eine geringfügige Bewegungsmöglichkeit des Schaltgliedes bezogen auf die Positionen des jeweiligen Drucktasters.

Darüber hinaus ist nachteilig, dass eine zuverlässige Rückstellung des Schaltgliedes aus der Schaltposition in die Ausgangslage nicht ohne weiteres erreicht ist, denn wenn die Membrane ihre elastischen Eigenschaften nach mehreren Kraftwechseln verliert, ist das Schaltglied manuell zurückzustellen.

Es ist daher Aufgabe der Erfindung, einen Schalter der eingangs genannten Gattung zur Verfügung zu stellen, mittels dem drei oder mehrere unterschiedliche Bewegungsrichtungen ausführbar sind, um bspw. einen Sitz in einem Kraftfahrzeug verstellen zu können, und bei dem gewährleistet ist, dass die jeweils gewählte Schaltposition exakt einer Bewegungsrichtung des zu bewegenden Gegenstandes, insbesondere eines Sitzes, zugeordnet ist.

Diese Aufgaben werden durch die Merkmale des kennzeichnenden Teiles von Patentanspruch 1 gelöst.

Weitere vorteilhafte Weiterbildungen der Erfindung ergeben sich aus den Unteransprüchen.

Dadurch, dass die Betätigungsplatte über den Hebelarm und das Übertragungselement in der Führungsnut, die in die Trägerplatte eingearbeit ist, sowohl axial verschiebbar als auch verschwenkbar ist, können die von dem Schaltglied aufgenommenen manuellen mechanischen Bewegungen bspw. der jeweiligen Bewegungsrichtung eines Fahrzeugsitzes zugeordnet werden. Jede Betätigungsbewegung des Schaltgliedes ist dabei exakt der Bewegungsrichtung des zu verstellenden Gegenstandes, insbesondere einem Fahrzeugsitzes zugeordnet, so dass der jeweilige Benutzer des Schalters ohne Ausprobieren die Fahrzeugsitzveränderung einstellen kann.

Es ist besonders vorteilhaft, die Sperrglieder, die kraftschlüssig mit der Betätigungsplatte und der Trägerplatte verbunden sind, vorzusehen, da dadurch gewährleistet ist, dass bei der Auslenkung der Betätigungsplatte in einer bestimmen Schaltpostion, die Betätigungsplatte in andere Bewegungsrichtungen gesperrt ist. Die Betätigungsplatte kann lediglich aus einer Schaltposition in die Ausgangsstellung zurücküberführt werden.

Die der Trägerplatte zugewandten Drucktaster sind derart versetzt zueinander angeordnet, dass diese exakt einer Zustellbewegung der Betätigungsplatte zugeordnet sind, wodurch sicher gestellt ist, dass die jeweilige Bewegung des Schaltgliedes der gewünschten Bewegungsrichtung des Fahrzeugsitzes entspricht. Die Lagerung der Betätigungsplatte und damit des Schaltgliedes führt dazu, dass die entsprechende Verstellbewegung des Schaltgliedes der Bewegungsrichtung des zu verstellenden Gegenstandes nachempfunden ist.

In der Zeichnung ist ein erfindungsgemäßes Ausführungsbeispiel dargestellt, das nachfolgend näher erläutert wird. Im Einzelnen zeigt:
- Figur 1: zwei an einem Fahrzeugsitz angebrachte Schalter, durch die sowohl die Sitzfläche als auch die Rückenlehne und deren Form durch die Betäti- gung der Schalter verstellbar ist, in Seitenansicht,
- Figur 2: einen der Schalter gemäß Figur 2 in perspektivischer Ansicht und im vormontierten Zustand,
- Figur 3: den Schalter gemäß Figur 1 in vergrößerter Darstellung im zusammen- gebauten Zustand und in Vorderansicht,
- Figur 4a: den Schalter gemäß Figur 3 entlang der Schnittlinie IVa-IVa,
- Figur 4b: den Schalter gemäß Figur 3 entlang der Schnittlinie IVb-IVb,
- Figur 5a: den Schalter gemäß Figur 3 entlang der Schnittlinie Va-Va,
- Figur 5b: den Schalter gemäß Figur 3 entlang der Schnittlinie Vb-Vb,
- Figur 6a: den Schalter gemäß Figur 1 in perspektivischer Ansicht und teilweise geöffnet, wobei der Schalter in Form einer axialen Zustellbewegung be- tätigt ist,
- Figur 6b: den Schalter gemäß Figur 6a entlang der Schnittlinie Vlb-Vlb,
- Figur 6c: den Schalter gemäß Figur 6b mit einem Drucktaster in vergrößerter Darstellung,
- Figur 7: den Schalter gemäß Figur 1 mit teilweise entfernten Bauteilen, wobei der Schalter um eine erste Drehachse ausgelenkt ist,
- Figur 8: den Schalter gemäß Figur 1 in perspektivischer Ansicht, wobei der Schalter um eine zweite Drehachse ausgelenkt ist,
- Figur 9a: den Schalter gemäß Figur 7 entlang der Schnittlinie IXa-IXa,
- Figur 9b: den Schalter gemäß Figur 8 entlang der Schnittlinie IXb-IXb und
- Figur 9c: den Schalter gemäß Figur 8 entlang der Schnittlinie IXc-IXc.

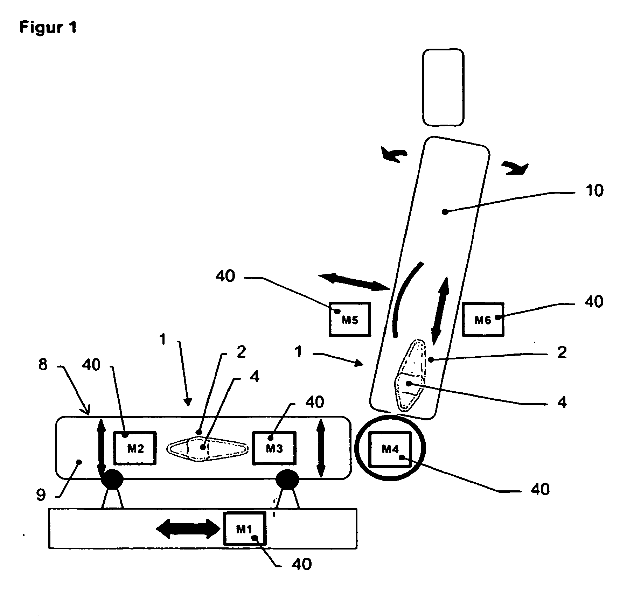

In Figur 1 sind zwei Schalter 1 dargestellt, die an einem Fahrzeugsitz 8 montiert sind. Durch die beiden Schalter 1 soll der Fahrzeugsitz 8, und zwar insbesondere dessen Sitzkissen 9 und dessen Rückenlehne 10, eingestellt werden, so dass bspw. der Abstand des Sitzkissens 9 zu dem Boden des Fahrzeuges an die individuellen Bedürfnisse angepasst werden kann. Durch die beiden Schalter 1 wird demnach eine mechanisch erzeugte Zustellbewegung in elektrische Schaltsignale umgewandelt, durch die sechs Antriebsmotoren 40 angesteuert werden.

Die Antriebsmotoren 40 sind dabei an dem Fahrzeugsitz 8 vorgesehen, um den Abstand des Fahrzeugkissens 9 zu dem Lenkrad des Fahrzeuges, die Höhe des Fahrzeugsitzes 8 zu dem Fahrzeugboden, die Neigung des Sitzkissens 9 bezogen auf die horizontale Ebene einzustellen. Diese drei Verstellmöglichkeiten des Fahrzeugsitzes 8 werden von einem der beiden Schalter 1 übernommen.

Der zweite Schalter 1 ist der Rückenlehne 10 des Fahrzeugsitzes 8 zugeordnet, durch den die drei anderen Antriebsmotoren 40 angesteuert werden, um die Neigung der Rückenlehne 10, die Wölbung der Rückenlehne 10 und die Höhenposition der Rückenlehne 10 gegenüber des Sitzkissens 9 einstellen zu können.

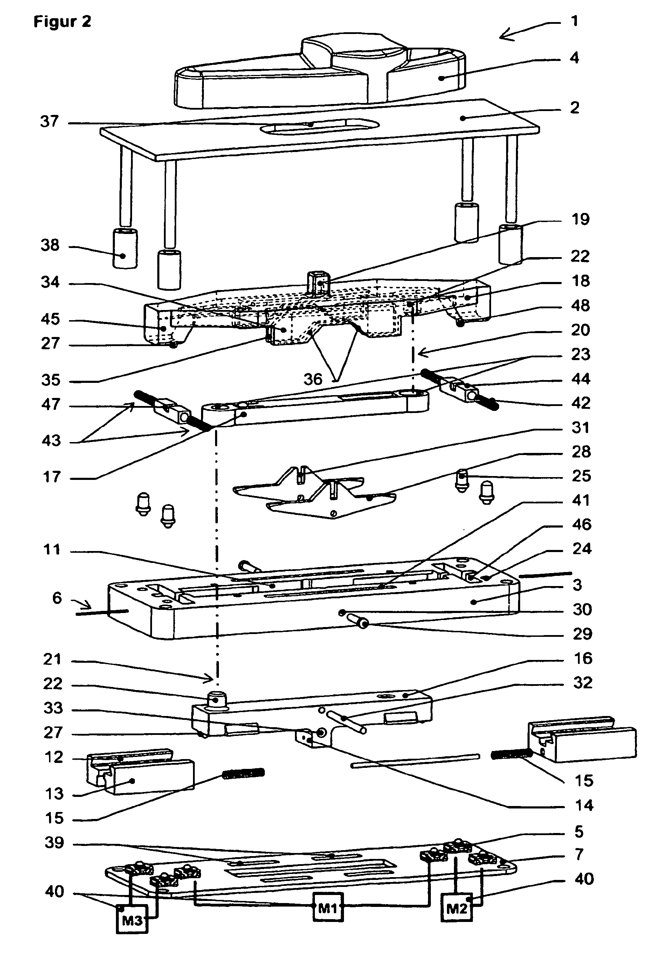

In Figur 2 sind die Bauteile abgebildet, durch die der Schalter 1 aufgebaut ist. Dabei wird ein Deckel 2 an einer Trägerplatte 3 über Distanzhülsen 38 beabstandet fest verbunden, so dass zwischen dem Deckel 2 und der Trägerplatte 3 ein Luftraum entsteht. Im montierten Zustand verlaufen der Deckel 2 und die Trägerplatte 3 parallel zueinander. Um den Schalter 1 bedienen zu können, ist ein Schaltglied 4 in Form eines Griffstückes an der Außenseite des Deckels 2 vorgesehen. Das Schaltglied verläuft parallel zu der Längsachse 6 der Trägerplatte 3. Die Montage und die Lagerung des Schaltgliedes 4 wird nachfolgend näher erläutert.

Auf der Außenseite der Trägerplatte 3 ist eine Leiterplatte 7 montiert, auf der sechs Drucktaster 5 in unterschiedlichen Positionen angeordnet sind. Durch den Drucktaster 5 kann folglich ein Schaltsignal generiert werden, das zur Steuerung des jeweiligen Antriebsmotors 40 dient. Die Verstellung des Schaltgliedes 4 bewirkt daher eine bestimmte Drucktaster-5-Auslösung.

In die Trägerplatte 3 ist eine Führungsnut 11 eingearbeitet, die parallel zu der Längsachse 6 ausgerichtet ist. In Längsrichtung der Führungsnut 11 sind zwei Führungsschlitten 13 eingesteckt und in diesen fixiert. In die beiden Führungsschlitten 13 sind schwalbenschwanzförmige Führungskanäle 12 eingearbeitet. Die Führungsschlitten 13 sind fest in den Führungskanälen 12 eingesetzt und weisen Führungskanal 12 auf, in die ein Übertragungselement 16 fluchtend zu der Längsachse 6 der Trägerplatte verschiebbar eingesetzt ist.

An der der Leiterplatte 7 zugewandten Unterseite des Übertragungselementes 16 ist ein Bund 14 angeformt, der demnach zwischen den beiden Führungsschlitten 13 angeordnet ist. Zwischen dem Bund 14 und dem jeweiligen Führungsschlitten 13 ist eine Druckfeder 15 vorgesehen. Durch die beiden Druckfedern 15 wird demnach das Übertragungselement 16 mittig in der Führungsnut 11 verspannt gehalten. Bei einer axialen Verschiebung des Übertragungselementes 16 in der Führungsnut 11 wird diejenige der beiden Druckfedern 15 zusammengedrückt, in deren Richtung das Übertragungselement 16 verschoben wird. Die andere der beiden Druckfedern 15 federt dagegen auseinander; nachdem die manuelle Betätigungskraft, die auf das Übertragungselement 16 einwirkt, gelöst ist, wird das Übertragungselement 16 durch die beiden Druckfedern 15 in die Ausgangsposition zurück überführt.

Aus der von der Trägerplatte 3 gebildeten Ebene ragt ein an dem Übertragungselement 16 angeformter Zapfen 22 ab, so dass an diesem ein Ausgleichsarm 17, in dem eine Bohrung 23 eingearbeitet ist, aufgesteckt werden kann. Die Verbindung zwischen dem Zapfen 22 des Übertragungselementes 16 und der Bohrung 23 des Ausgleichsarmes 17 bilden dabei ein erstes Drehgelenk 21, dessen Drehachse senkrecht zur der Längsachse 6 und des Übertragungselements 16 ausgerichtet ist.

Dem Drehgelenk 21 gegenüberliegend ist in den Ausgleichsarm 17 eine weitere Bohrung 23 vorgesehen, in die ein an einer Betätigungsplatte 18 angeformter Zapfen 22 eingeschoben ist, so dass durch die Verbindung zwischen dem Zapfen 22 der Betätigungsplatte 18 und der Bohrung 23 des Ausgleicharms 17 ein zweites Drehgelenk 20 gebildet ist. Die beiden derart gebildeten Drehgelenke 20 und 21 sind beabstandet angeordnet und deren Drehachsen verlaufen parallel zueinander.

An der dem Deckel 2 zugewandten Oberfläche der Betätigungsplatte 18 ist ein Zapfen 19 angeformt, der durch ein in den Deckel 2 eingearbeitetes Langloch 37 durchgreift und aus diesem absteht. In das Schaltglied 4 ist zur Aufnahme des rechteckförmigen Zapfens 19 eine mit diesem korrespondierende Bohrung vorgesehen, so dass das Schaltglied 4 mit der Betätigungsplatte 18 formschlüssig verbunden ist. Die von dem Schaltglied 4 aufgenommenen mechanischen Bewegungen werden somit auf die Betätigungsplatte 18 nachfolgend an den Ausgleichsarm 17 und von diesem auf das Übertragungselement 16 weitergeleitet. Der Zapfen 19 ist zu den beiden Drehgelenken 20 und 21 mit einem identischen Abstand angeordnet.

Um nunmehr die Verstellbewegungen der Betätigungsplatte 18 den sechs Drucktastern 5 zuzuordnen, sind zunächst in die Trägerplatte 3 vier Durchgangsbohrungen 34 eingearbeitet, in die jeweils ein Stößel 25 eingesetzt ist. Die Position der Durchgangsbohrungen 24 entspricht dabei den Positionen der vier außenliegenden Drucktastern 5 auf der Leiterplatte 7. Wenn demnach einer der Stößel 25 in Richtung des jeweiligen Drucktasters 5 bewegt wird, wird dieser zusammengedrückt und es entsteht ein elektrisches Schaltsignal, da in dem Drucktaster 5 ein Kurzschluss erzeugt wird.

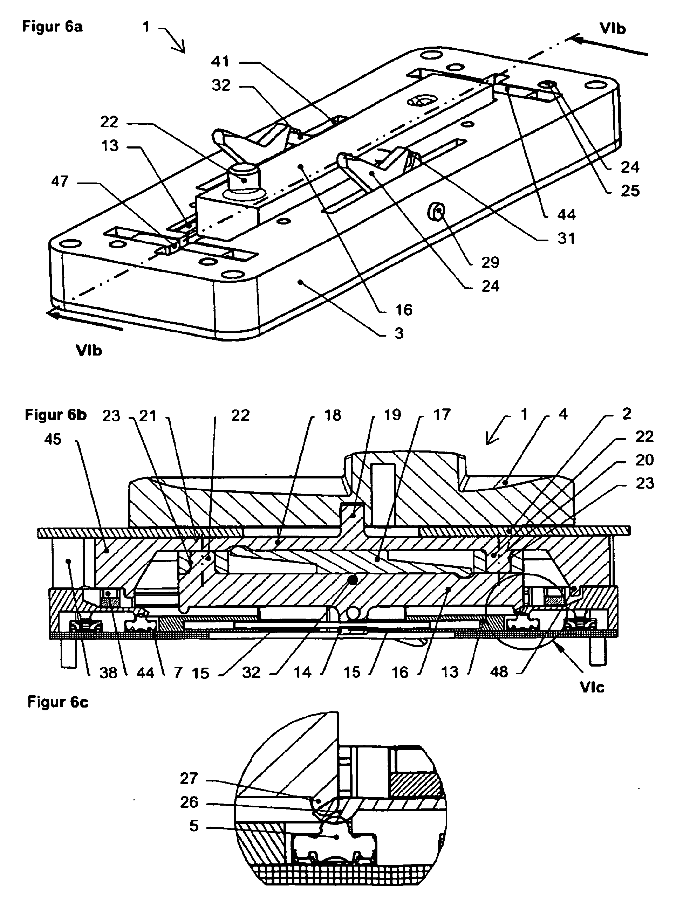

An den beiden innenliegenden Stirnseiten der Führungsnut 11, die senkrecht zu der Längsachse 6 der Trägerplatte 3 ausgerichtet sind, sind zwei Nocken 6 angeformt, die in Richtung des darunter angeordneten Drucktasters 5 bewegbar sind. An dem Übertragungselement 16 sind zwei Betätigungszapfen 27 angeformt, die beim axialen Zustellen der Betätigungsplatte 18 auf die Nocken 26 einwirken und diese in Richtung des jeweils darunter angeordneten Drucktasters 5 bewegen, so dass dieser elektrisch geschaltet werden kann. Diese Schaltposition kann den Figuren 6b und 6c entnommen werden.

Zur optimalen Übertragung der Auslenkung der Betätigungsplatte 18 an die Drehachsen 20 und 21 sind in die Trägerplatte 3 zwei parallel zueinander verlaufende Führungsschlitze 41 eingearbeitet, in die jeweils ein Führungsschlitten 44 eingesetzt ist. Die beiden Führungsschlitze 41 verlaufen senkrecht zu der Längsachse 6 der Trägerplatte 3; zwischen diesen beiden Führungsschlitzen 41 ist die Führungsnut 11 angeordnet.

In die beiden Führungsschlitten 44 ist ein in Richtung der Betätigungsplatte 18 ausgerichteter Aufnahmeschlitz 46 eingearbeitet, in den das freie Ende 45 der Betätigungsplatte 18, insbesondere der von diesen abstehende Steg 27, eingesteckt ist, so dass die Betätigungsplatte 18 formschlüssig mit dem Führungsschlitten 44 verbunden ist.

In die beiden Stirnseiten, die gegenüber zueinander liegen, des jeweiligen Führungsschlitten 44 sind Öffnungen eingearbeitet, in die jeweils eine Druckfeder 42 eingeschoben ist, deren gegenüberliegendes freies Ende sich an der Stirnseite des jeweiligen Führungsschlitzes 41 abstützt. Die beiden Druckfedern 42 bilden ein Federpaar 43, durch das der Führungsschlitten 44 zentrisch in dem Führungsschlitz 41 gehalten wird.

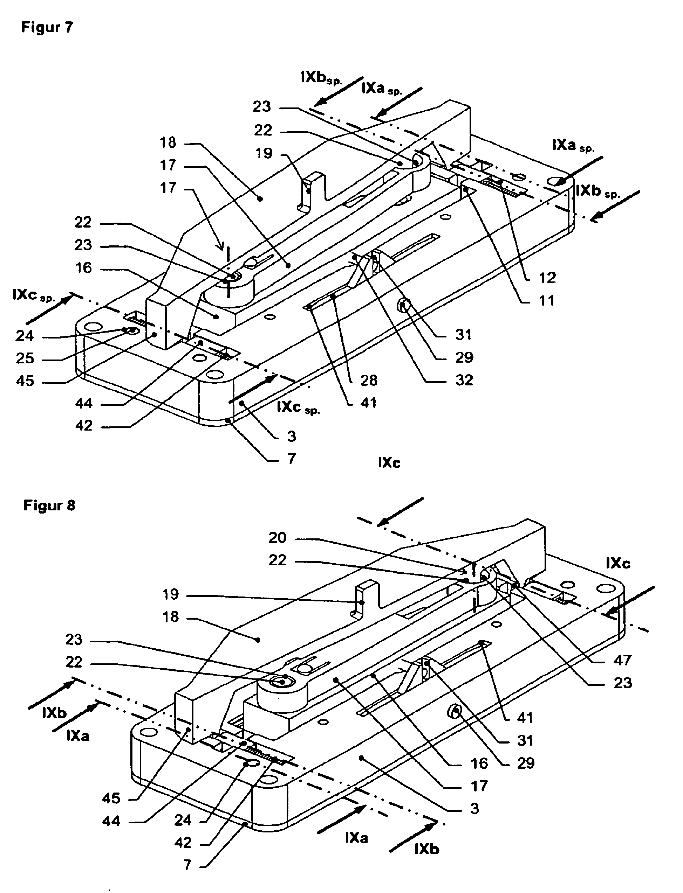

Erfolgt nunmehr ein Verschwenken der Betätigungsplatte 18 gemäß den Figuren 7 und 8, wird der Führungsschlitten 44 in die entsprechende Richtung des Kraftverlaufes gedrückt, so dass die gegenüberliegende Druckfeder 42 ausgelenkt wird. Das freie Ende 45 der Betätigungsplatte 18 überfährt dabei einen der Stößel 25, so dass durch diese Zustellbewegung des Stößels 25 der jeweilige Drucktaster 5 betätigt ist. Gleichzeitig erfolgt die Fixierung des gegenüberliegenden freien Endes 45 der Betätigungsplatte 18 durch das gegenüberliegende Federpaar 43, denn das gegenüberliegende freie Ende der Betätigungsplatte 18 wird durch dieses Federpaar 43 zentrisch in den Führungsschlitz 41 abgestützt. Somit erfolgt lediglich eine definierte Betätigung des gewünschten Stößels 25. Die anderen Stößel 25 verbleiben in ihrer Ruhestellung. Eine solche Fixierung der Betätigungsplatte 18 wird durch die beiden Drehgelenke 20 und 21 ermöglicht, denn in diesen kann eine Relativbewegung zwischen der Betätigungsplatte 18 zu dem Ausgleichsarm 17 bzw. zwischen dem Ausgleichsarm 17 und dem Übertragungselement 16 erfolgen.

Um weitere Auslenkungen der Betätigungsplatte 18 in einer der sechs Schaltpositionen zu sperren, sind zwei zueinander parallel angeordnete Sperrglieder 28 vorgesehen, die in Form einer Wippe, nämlich über einen Bolzen 29 an der Trägerplatte begrenzt verschwenkbar abgestützt sind. Um die Auslenkung der Sperrglieder 28 nicht zu behindern, sind in der Leiterplatte 7 vier Schlitze 39 eingearbeitet, in die das jeweilige Sperrglied 28 in Abhängigkeit von der axialen Bewegungsrichtung der Betätigungsplatte 18 eintauchen kann, das ist in Figur 6 dargestellt. Die Bolzen 29 werden in Aufnahmeöffnungen 30, die in die Trägerplatte 3 eingearbeitet sind, gehalten.

In die Sperrglieder sind zwei fluchtend zueinander verlaufende Schlitze 31 eingearbeitet. In die Schlitze 31 wird ein Führungsstift 32 eingesteckt, der eine in das Übertragungselement 16 eingearbeitete Durchgangsbohrung 47 durchgreift.

Um eine kraftschlüssige Wirkverbindung zwischen den Sperrgliedern 28 und der Betätigungsplatte 18 herzustellen, sind an dieser zwei Wangen 34 angeformt, die in Richtung des Sperrgliedes 28 abstehen. In beide Wangen 34 sind zwei Führungsnuten 35 eingearbeitet, die parallel zu der Längsachse 6 der Trägerplatte 3 ausgerichtet sind. Im montierten Zustand sind die beiden Sperrglieder 28 in die Führungsschlitze 41 der Trägerplatte 3 eingesteckt. Des Weiteren ist in die Wangen 34 jeweils eine trapezförmige Aussparung 36 vorgesehen, um die Bewegungen der Betätigungsplatte 18 bei dieser Bewegung nicht zu behindern. Die Innenkontur der Aussparung 36 ist nämlich größer bemessen als die Außenkontur der Sperrglieder 28.

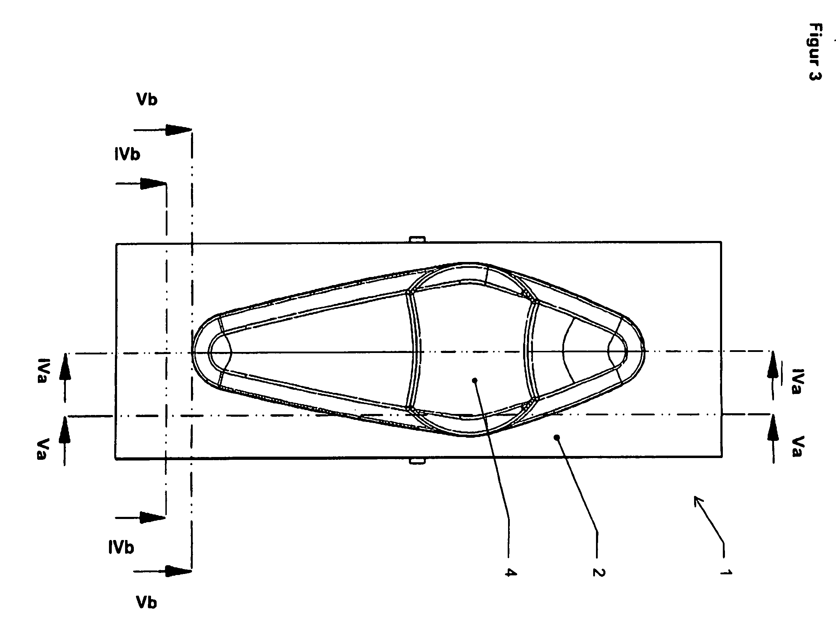

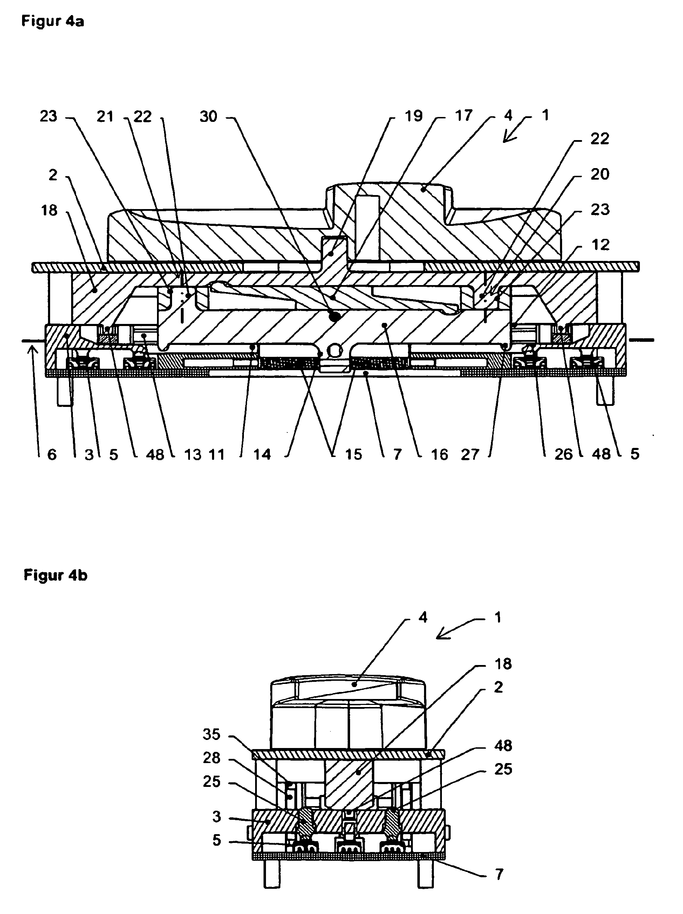

Aus den Figuren 3, 4a, 4b, 5a und 5b ist nunmehr der Aufbau des Schalter 1 im montierten Zustand zu entnehmen. Insbesondere aus Figur 4b wird ersichtlich, dass das freie Ende 45 der Betätigungsplatte 18 die aus der Trägerplatte 3 abstehende Stirnseite der Stößel 25 überstreicht und somit diese in Richtung des jeweils darunter angeordneten Drucktasters 5 zur Erzeugung eines Schaltsignales bewegen kann. Auch die axiale Zustellung des Nockens 26 ist aus Figur 4b zu entnehmen, denn wenn der an der Betätigungsplatte 18 angeformte Betätigungszapfen 27 in Richtung des Nockens 26 gedrückt wird, dann kann durch diesen der darunter angeordnete Drucktaster 5 betätigt werden.

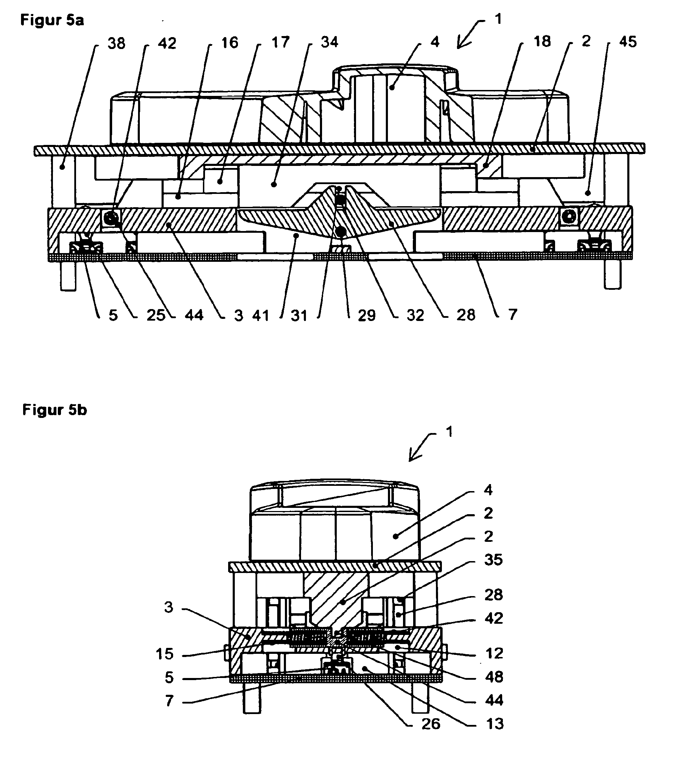

Der Figur 5a kann insbesondere die Lagerung und die Auslenkung der Sperrglieder 28 entnommen werden und auf welche Art und Weise diese in Führungsschlitze 41 der Trägerplatte 3 eingeschoben sind. Der in der Aufnahmeöffnung 30 eingesetzte Bolzen 29 verläuft dabei parallel zu dem Bolzen 32, der in die beiden Aufnahmeschlitze 31 der Sperrglieder 28 kragt. Wenn demnach die Betätigungsplatte 18 um eine der beiden Drehgelenke 20 bzw. 21 ausgelenkt wird, kann die Betätigungsplatte 18 aufgrund der kraftschlüssigen Wirkverbindung zwischen dieser und den beiden Sperrgliedern 28 sowie der Trägerplatte 3 in keine weitere Schaltposition bewegt werden.

Das Eintauchen der beiden Sperrglieder 28 bei der axialen Bewegung der Betätigungsplatte 18 in die Führungsschlitze 35, die parallel zu der Längsachse 6 verlaufen, ist in der Figur 6a abgebildet. Die Sperrglieder 28 werden somit um den Bolzen 29 verschwenkt und tauchen in die Führungsschlitze 35 ein, so dass durch die Sperrglieder 28 eine kraftschlüssige, also ortsfeste Verbindung zwischen der Betätigungsplatte 18 und der Trägerplatte 3 erzeugt ist.

Durch Figur 6b wird die Auslenkung des Schalters 1 in axialer Richtung gezeigt, der in Figur 6b rechte Betätigungszapfen 27 des Übertragungselementes 16 wirkt dabei auf den darunter angeordneten Nocken 26 an der Innenseite der Führungsnut 11 ein und bewegt diesen auf den darunter angeordneten Drucktaster 5.

In Figur 6c ist der Drucktaster 5 dargestellt und wie dieser durch die Zustellbewegung des Nockens 26 axial betätigbar ist. Der Drucktaster 5 weist nämlich zwei Schaltkontakte auf, die durch eine metallische Schnappscheibe in der Schaltposition elektrisch miteinander verbunden werden, so dass dadurch ein Kurzschluss erzeugt ist, der als elektrisches Schaltsignal verwendet wird.

In Figur 7 ist nunmehr gezeigt, wie die Auslenkung der Betätigungsplatte 18 um die Drehachse 21 erfolgt und gleichzeitig das andere gegenüberliegende freie Ende 45 der Betätigungsplatte 18 durch das Druckfederpaar 43 zentrisch fixiert wird. Der dortige Führungsschlitten 44 wird nämlich durch die beiden Druckfedern 42 in seiner Ausgangsposition fixiert, so dass lediglich das andere gegenüberliegende freie Ende 45 der Betätigungsplatte 18 in Richtung des entsprechenden Stößels 25 bewegt werden kann. Die Unterseite des freien Endes 45 der Betätigungsplatte 18 überstreicht dabei die aus der Trägerplatte 3 abstehende Stirnseite des Stößels 25 und bewegt diesen in Richtung des darunter angeordneten Drucktasters 5.

In Figur 7 wird auch die Relativbewegung gezeigt, die zwischen dem Übertragungselement 16 und dem Ausgleichsarm 17 stattfindet, wenn die Betätigungsplatte 18 um die Drehachse 21 verschwenkt wird.

Durch die Figur 8 wird die Auslenkung der Betätigungsplatte 18 um die Drehachse 20 gezeigt. Dies bedeutet, dass zwischen der Betätigungsplatte 18 und dem Ausgleichsarm 17 eine Relativbewegung stattfindet, um zu erreichen, dass der Ausgleichsarm 17 nahezu parallel zu der Längsachse 6 der Trägerplatte 3 verläuft und aus dieser Position nicht aufgrund der Betätigungskraft, die auf die Betätigungsplatte 18 einwirkt, ausgelenkt wird.

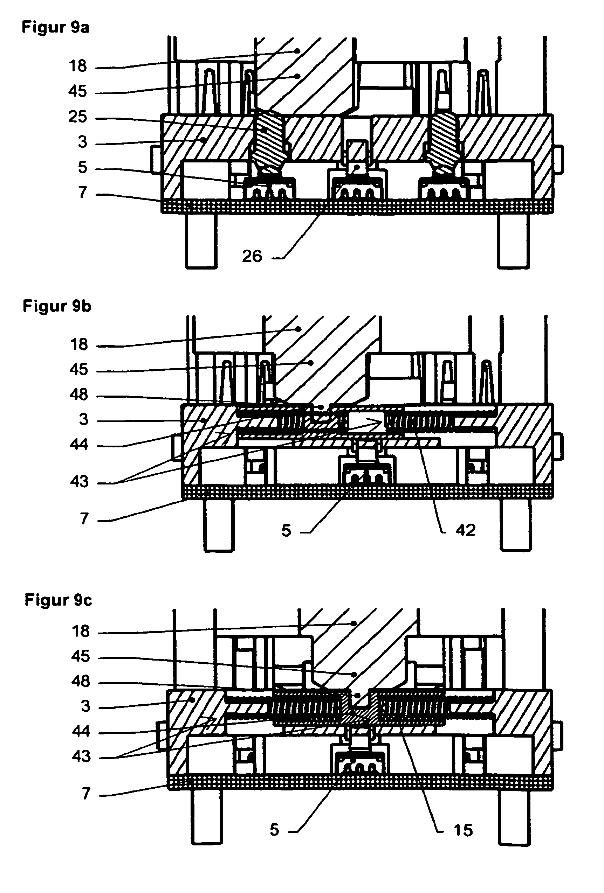

Aus den Figuren 9a, 9b und 9c kann nunmehr entnommen werden, welchen Auslenkungswinkel die Betätigungsplatte 18 in der jeweiligen Schnittebene durchläuft oder aber aufgrund der auf das freie Ende 45 der Betätigungsplatte 18 einwirkenden Federkräfte durch eines der beiden Federpaare 23 zentrisch fixiert ist. Diese Position ist insbesondere in Figur 9c abgebildet.

## Patentansprüche

1. Schalter (1) zur Umwandlung von mechanisch erzeugten Bewegungen in elektrische Schaltsignale, bestehend aus einem Deckel (2) und einer Trägerplatte (3), die beabstandet und fest miteinander verbunden sind, aus einem relativ zu dem Deckel (2) begrenzt beweglichen und von außen betätigbaren Schaltglied (4) und aus einem oder mehreren Drucktastern (5), die im montierten Zustand zwischen einer Leiterplatte (7) und dem Schaltglied (4) angeordnet sind und durch die die jeweiligen Verstellbewegungen des Schaltgliedes (4) erfassbar und in Schaltsignale umgewandelt sind, wobei in die Trägerplatte (3) eine in Richtung des Schaltgliedes (4) ausgerichtete und zu diesem verlaufende Führungsnut (11) eingearbeitet ist, wobei
in die Führungsnut (11) ein Übertragungselement (16) eingesetzt und in dieser linear begrenzt verstellbar gehalten ist, dass mit dem Übertragungselement (16) ein Ausgleichsarm (17) verbunden ist,
**dadurch gekennzeichnet,**
- **dass** der Ausgleichsarm (17) relativ zu dem Übertragungselement (16) verschwenkbar ist, und dass an dem Ausgleichsarm (17) eine Betätigungsplatte (18) verschwenkbar angebracht ist, an der ein den Deckel (2) durchgreifender Zapfen (19) angeformt ist, auf dem das Schaltglied (4) arretiert ist.

2. Schalter nach Anspruch 1,
**dadurch gekennzeichnet,**
**dass** das Übertragungselement (16) und der Ausgleichsarm (17) sowie der Ausgleichsarm (17) und die Betätigungsplatte (18) jeweils über einen Zapfen (22) und einer diesen aufnehmenden Bohrung (23) miteinander verbunden sind, durch die jeweils ein Drehgelenk (20, 21) gebildet ist, und dass die Drehachsen (20', 21') der beiden Drehgelenke (20, 21) voneinander beabstandet und senkrecht zu der Trägerplatte (3) ausgerichtet sind.

3. Schalter nach Anspruch 2,
**dadurch gekennzeichnet,**
**dass** der Zapfen (19) der Betätigungsplatte (18) zwischen den beiden Drehgelenken (20, 21), vorzugsweise zentrisch zu diesen, angeordnet ist.

4. Schalter nach einem der vorgenannten Ansprüche,
**dadurch gekennzeichnet,**
**dass** in die Trägerplatte (3) zwei Führungskanäle (46) eingearbeitet sind, dass die Führungskanäle (46) senkrecht zu der Längsachse (6) der Trägerplatte (3) verlaufen und dass die Führungsnut (11) zwischen den beiden Führungskanälen (46) angeordnet ist.

5. Schalter nach Anspruch 4,
**dadurch gekennzeichnet,**
**dass** in den jeweiligen Führungskanal (46) zwei Druckfedern (42) eingesetzt sind, die fluchtend zueinander verlaufen und gemeinsam ein Federpaar (43) bilden, zwischen denen das jeweilige freie Ende (45) der Betätigungsplatte (18) verspannt gehalten ist.

6. Schalter nach Anspruch 5,
**dadurch gekennzeichnet,**
**dass** das Übertragungselement (16) und der Ausgleichsarm (17) zwischen den beiden Federpaaren (43) angeordnet sind.

7. Schalter nach Anspruch 4, 5 oder 6,
**dadurch gekennzeichnet,**
**dass** in den jeweiligen Führungskanal (46) ein Führungsschlitten (44) linear begrenzt beweglich eingesetzt ist, in dessen beide gegenüberliegende Stirnseiten eine Aüfnahmeöffnung zur Abstützung der jeweiligen Druckfeder (42) eingearbeitet ist, und dass in die der Betätigungsplatte (18) zugewandten Oberfläche des Führungsschlitten (44) ein Aufnahmeschlitz (47) eingearbeitet ist, in den das freie Ende (45) der Betätigungsplatte (18) eingreift und in diesem formschlüssig gehalten ist.

8. Schalter nach einem der vorgenannten Ansprüche,
**dadurch gekennzeichnet,**
**dass** die Drucktaster (5) auf einer Leiterplatte (7) montiert sind, dass bei der Bewegung der Betätigungsplatte (18) in Abhängigkeit von deren Bewegungsrichtung oder deren Drehbewegung die Drucktaster (5) durch diese oder durch das Übertragungselement (16) in Form einer axialen Zustellbewegung betätigt sind.

9. Schalter nach Anspruch 8,
**dadurch gekennzeichnet,**
**dass** in die Trägerplatte (3) vier senkrecht zu der Längsachse (6) der Trägerplatte (3) ausgerichtete Durchgangsbohrungen (24) eingearbeitet sind, in die jeweils ein Stößel (25) eingesetzt ist, dessen erste Stirnseite der Betätigungsplatte (18) und dessen zweite Stirnseite einem der Drucktaster (5) zugeordnet ist.

10. Schalter nach Anspruch 8,
**dadurch gekennzeichnet,**
**dass** an den beiden senkrecht zu der Längsachse (6) der Trägerplatte (3) verlaufenden Stirnseiten der Führungsnut (11) jeweils ein Nocken (26) angeformt ist, der in die Führungsnut (11) absteht, und dass an dem Übertragungselement (16) zwei den Nocken (26) zugewandte und im montierten Zustand fluchtend zu diesen ausgerichteten Betätigungszapfen (27) angebracht sind, durch die der jeweilige Nocken (26) beim linearen Verfahren der Betätigungsplatte (18) axial in Richtung eines der Drucktaster (5) bewegbar ist.

11. Schalter nach einem der vorgenannten Ansprüche,
**dadurch gekennzeichnet,**
**dass** in die Trägerplatte (3) seitlich neben der Führungsnut (11) und parallel zu dieser verlaufend jeweils ein Führungsschlitz (41) eingearbeitet ist, in den jeweils ein als Wippe ausgebildetes Sperrglied (28) eingesetzt ist, und dass das Sperrglied (28) über einen Bolzen (29) an der Trägerplatte (3) verschwenkbar gehalten ist.

12. Schalter nach Anspruch 11,
**dadurch gekennzeichnet,**
**dass** in die beiden Sperrglieder (28) jeweils ein in Richtung der Betätigungsplatte (18) weisender Schlitz (31) eingearbeitet ist, in die ein Führungsstift (32) eingesetzt ist, und dass an die der Trägerplatte (3) zugewandten Oberfläche der Betätigungsplatte (18) zwei gegenüberliegende und parallel zueinander verlaufende Wangen (34) angeformt sind, in die parallel zu der Längsachse (6) der Betätigungsplatte (18) eine Führungsnut (35) eingearbeitet ist, dass die Sperrglieder (28) in jeweils einer der Führungsnuten (35) im montierten Zustand eingesteckt sind und dass in die beiden Wangen (34) eine trapezförmige Aussparung (36) eingearbeitet ist, deren Innenkontur größer bemessen ist als die Außenkontur der Sperrglieder (28).

13. Schalter nach Anspruch 12
**dadurch gekennzeichnet,**
**dass** in die Trägerplatte (3) fluchtend zu den beiden Führungsnuten (35) der Wangen (34) jeweils ein Schlitz (41) eingearbeitet ist, in die die Sperrglieder (28) in Abhängigkeit von der Bewegungsrichtung des Schaltgliedes(4) eintauchen.

14. Schalter nach einem der vorgenannten Ansprüche
**dadurch gekennzeichnet,**
**dass** in die Führungsnut (11) zwei Führungsschlitten (13) ortsfest eingesteckt sind, dass in diese jeweils zwei parallel zu der Längsachse (6) verlaufenden Führungskanäle (12) eingearbeitet sind, in die das Übertragungselement (16) eingeschoben und in diesem verfahrbar gehalten ist.

15. Schalter nach Anspruch 14,
**dadurch gekennzeichnet,**
**dass** an dem Übertragungselement (16) ein senkrecht zu der Längsachse (6) der Trägerplatte (3) ausgerichteter Bund (14) angeformt ist, an dem zwei Druckfedern (15) parallel zu der Längsachse (6) der Trägerplatte (3) anliegen und durch diesen abgestützt sind, und dass durch die Druckfedern (15) das Übertragungselement (16) zwischen dem Bund (14) und dem jeweiligen Ende der Trägerplatte (3) verspannt gehalten sind.

16. Schalter nach einem der vorgenannten Ansprüche
**dadurch gekennzeichnet,**
**dass** die jeweiligen Drucktaster (5) elektrisch mit einer Leiterplatte (7) gekoppelt sind, und dass die von den Drucktastern (5) übermittelten Schaltsignale von der Leiterplatte (7) aufgenommen und an eine Antriebsvorrichtung (40), vorzugsweise einen Elektromotor zur Verstellung eines Sitzes (8, 9, 10) in einem Fahrzeug, verwendet sind.

17. Schalter nach einem der vorgenannten Ansprüche
**dadurch gekennzeichnet,**
**dass** das Schaltglied (4) in sechs unterschiedliche Schaltpositionen bewegbar ist, dass jeder Schaltposition ein Drucktaster (5) zugeordnet ist und dass die Bewegung des Schaltgliedes (4) bei Erreichen einer der sechs Schaltpositionen in die anderen Schaltpositionen gesperrt ist.

## Claims

1. A switch (1) for converting mechanically generated movements into electrical switching signals, consisting of a cover (2) and a carrier plate (3) that are located at a distance from one another and are fixedly connected together, of a switching element (4) that moves to a limited extent relative to the cover (2) and can be actuated from the outside and of one or more pushbuttons (5) which, in the installed condition, are arranged between a circuit board (7) and the switching element (4) and through which the particular adjustment movements of the switching element (4) can be measured and converted into switching signals, with a guide groove (11) aligned in the direction of the switching element (4) and running towards this is worked into the carrier plate (3), into which a transmission element (16) is inserted and is held in this with a limited linear movement, that the transmission element (16) has an equalisation arm (17) connected to it,
**characterised in that**,
the equalisation arm (17) can be swivelled in relation to the transmission element (16), and that the equalisation arm (17) has an actuator plate (18) attached to it in a swivelling manner, with the actuator plate (18) having a peg (19) passing through the cover (2) formed onto it, on which the switching element (4) is locked.

2. The switch in accordance with Claim 1,
**characterised in that,**
the transmission element (16) and the equalisation arm (17) as well as the equalisation arm (17) and the actuator plate (18) are each connected together by means of a peg (22) and a hole (23) accommodating the peg (22), by means of which one rotating joint (20, 21) is formed in each case, and that the axes of rotation (20', 21') of both rotating joints (20, 21) are located at a distance from one another and are aligned at right angles to the carrier plate (3).

3. The switch in accordance with Claim 2,
**characterised in that**,
the peg (19) of the actuator plate (18) is arranged between the two rotating joints (20, 21) and is preferably arranged centrally in relation to these.

4. The switch in accordance with one of the aforementioned claims,
**characterised in that**,
two guide channels (46) are worked into the carrier plate (3), that the guide channels (46) run at right angles to the longitudinal axis (6) of the carrier plate (3) and that the guide groove (11) is arranged between the two guide channels (46).

5. The switch in accordance with Claim 4,
**characterised in that**,
two compression springs (42) are inserted into the corresponding guide channel (46), run in alignment with one another, and jointly form a spring pair (43) between which the corresponding free end (45) of the actuator plate (18) is kept clamped.

6. The switch in accordance with Claim 5,
**characterised in that**,
the transmission element (16) and the equalisation arm (17) are arranged between the two spring pairs (43).

7. The switch in accordance with Claim 4, 5 or 6,
**characterised in that**,
a guide slide (44) is inserted in the corresponding guide channel (46) with a restricted range of linear movement, with the guide slide (44) having a holding opening worked into both of its opposite end faces in order to support the corresponding compression spring (42), and that the surface of the guide slide (44) facing the actuator plate (18) has a holding slot (47) worked into it, into which the free end (45) of the actuator plate (18) engages and is held in it in a form-fitting arrangement.

8. The switch in accordance with one of the aforementioned claims,
**characterised in that**,
the pushbuttons (5) are mounted on a circuit board (7), that when the actuator plate (18) is moved, the pushbuttons (5) are actuated in the form of an axial advancing movement by the actuator plate (18) or by the transmission element (16) depending on the movement direction or the rotational movement of the actuator plate (18).

9. The switch in accordance with Claim 8,
**characterised in that**,
the carrier plate (3) has four through-holes (24) worked into it at right angles to the longitudinal axis (6) of the carrier plate (3), with one tappet (25) inserted in each of the through-holes (24), the first face end of which is assigned to the actuator plate (18) and the second face end of which is assigned to one of the pushbuttons (5).

10. The switch in accordance with Claim 8,
**characterised in that**,
one cam (26) each is formed onto the two end faces of the guide groove (11) running at right angles to the longitudinal axis (6) of the carrier plate (3), with the cam (26) projecting into the guide groove, and that two actuator pegs (27) facing the cams (26) and oriented in alignment with them in the mounted condition are attached to the transmission element (16), by means of which actuator pegs (27) the particular cam (26) can be moved axially in the direction of one of the pushbuttons (5) when the actuator plate (18) is moved in a linear direction.

11. The switch in accordance with one of the aforementioned claims,
**characterised in that,**
one guide slot (41) each is worked into the carrier plate (3) on the side next to the guide groove (11) and running in parallel to it, with one locking element (28) formed as a rocker inserted into each guide slot (41), and that the locking element (28) is held in a swivelling arrangement on the carrier plate (3) by means of a pin (29).

12. The switch in accordance with Claim 11,
**characterised in that**,
a slot (31) pointing in the direction of the actuator plate (18) is worked into both locking elements (28), with a guide pin (32) inserted into the slot (31), and that two cheeks (34) running in parallel are formed on opposite sides of the surface of the actuator plate (18) facing the carrier plate (3), with a guide groove (35) worked into the cheeks (34) in parallel to the longitudinal axis (6) of the actuator plate (18), that the locking elements (28) are each inserted into one of the guide grooves (35) in mounted condition and that a trapezoidal opening (36) is worked into both cheeks (34), the inner contour of which is larger than the outer contour of the locking elements (28).

13. The switch in accordance with Claim 12,
**characterised in that**,
a slot (41) is worked into carrier plate (3) in alignment with each of the two guide grooves (35) of the cheeks (34), with the locking elements (28) engaging in the slots (41) as a function of the movement direction of the switching element (4).

14. The switch in accordance with one of the aforementioned claims,
**characterised in that**,
two guide slides (13) are inserted in a fixed location in the guide groove (11), that two guide channels (12) running in parallel to the longitudinal axis (6) are worked into each of the guide slides (13) and the transmission element (16) is pushed into the guide channels (12) and is held in a moveable arrangement in them.

15. The switch in accordance with Claim 14,
**characterised in that,**
a collar (14) aligned at right angles to the longitudinal axis (6) of the carrier plate (3) is formed on the transmission element (16), with two compression springs (15) running parallel to the longitudinal axis (6) of the carrier plate (3) in contact with the collar (14) and supported against it, and that the compression springs (15) hold the transmission element (16) clamped between the collar (14) and the corresponding end of the carrier plate (3).

16. The switch in accordance with one of the aforementioned claims,
**characterised in that**,
the particular pushbuttons (5) are electrically connected to a circuit board (7) and that the switch signals transferred from the pushbuttons (5) are received by the circuit board (7) and are used in a drive device (40), preferably an electric motor, for adjusting a seat (8, 9, 10) in a vehicle.

17. The switch in accordance with one of the aforementioned claim,
**characterised in that,**
the switching element (4) can be moved to six different switch positions, that a pushbutton (5) is assigned to each switch position and that the movement of the switching element (4) into the other switch positions is blocked when one of the six switching positions is reached.

## Revendications

1. Commutateur (1) servant à la transformation de mouvements mécaniques en signaux de commande électriques, comprenant un couvercle (2) et une plaque de support (3), liés rigidement l'un à l'autre à une certaine distance, un élément de commande (4) actionné de l'extérieur et à déplacement limité relativement au couvercle (2), un ou plusieurs boutons (5) disposés en état monté entre le circuit imprimé (7) et l'élément de commande (4), qui permettent de saisir et de transformer en signaux de commande les mouvements de réglage respectifs de l'élément de commande (4), la plaque de support (3) comprenant une gorge de guidage (11) orientée en direction de l'élément de commande (4) et s'étendant vers celui-ci, la gorge de guidage (11) portant un élément de transmission (16) à déplacement linéaire limité, et où un bras de compensation (17) est lié à l'élément de transmission (16),
**caractérisé en ce que**
le bras de compensation (17) se laisse pivoter relativement à l'élément de transmission (16) et que, sur le bras de compensation (17), il est monté de manière pivotante une plaque d'actionnement (18) sur laquelle il est formé un téton (19) passant à travers le couvercle (2) où est positionné l'élément de commande (4).

2. Commutateur d'après la revendication 1,
**caractérisé en ce que**
l'élément de transmission (16) et le bras de compensation (17) ainsi que le bras de compensation (17) et la plaque d'actionnement (18) sont liés entre eux moyennant un téton (22) ainsi qu'un perçage (23) qui le reçoit, par lesquels il est formé respectivement une articulation (20, 21), et que les axes de rotation (20', 21') des deux articulations (20, 21) sont disposés à une certaine distance entr'eux et orientés perpendiculairement à la plaque de support (3).

3. Commutateur d'après la revendication 2,
**caractérisé en ce que**
le téton (19) de la plaque d'actionnement (18) est disposé entre les articulations (20, 21), de préférence centré par rapport à elles.

4. Commutateur d'après une des revendications précédentes,
**caractérisé en ce que**
dans la plaque de support (3), il est pratiqué deux canaux de guidage (46), que les canaux de guidage (46) sont orientés perpendiculairement à l'axe longitudinal (6) de la plaque de support (3) et que la gorge de guidage (11) est disposée entre les deux canaux de guidage (46).

5. Commutateur d'après la revendication 4,
**caractérisé en ce que**
dans le canal de guidage respectif (46), il est monté deux ressorts de pression (42) en alignement précis l'un par rapport à l'autre et formant ensemble une paire de ressorts (43) entre lesquels est serré l'extrémité libre respectif (45) de la plaque d'actionnement (18).

6. Commutateur d'après la revendication 5,
**caractérisé en ce que**
l'élément de transmission (16) et le bras de compensation (17) sont disposés entre les deux paires de ressorts (43).

7. Commutateur d'après les revendications 4, 5 ou 6,
**caractérisé en ce que**
dans le canal de guidage respectif (46), il est disposé à déplacement linéaire limité, un chariot de guidage (44) dont les deux faces frontales opposées comportent une ouverture de logement pour l'appui du ressort de pression respectif (42), et que, dans la surface du chariot de guidage (44) donnant sur la plaque d'actionnement (18), il est pratiqué une fente de logement (47) dans laquelle s'engrène, verrouillée mécaniquement, l'extrémité libre (45) de la plaque d'actionnement (18).

8. Commutateur d'après une des revendications précédentes,
**caractérisé en ce que**
les boutons (5) sont montés sur un circuit imprimé (7) et que lors du déplacement de la plaque d'actionnement (18) et suivant son sens de déplacement ou de sa rotation, les boutons (5) sont actionnés par celle-ci ou par un élément de transmission (16) sous la forme d'une avance axiale.

9. Commutateur d'après la revendication 8,
**caractérisé en ce que**
dans la plaque de support (3), il est pratiqué quatre perçages (24) alignés perpendiculairement à l'axe longitudinal (6) de la plaque de support (3), dans lesquels il est inséré respectivement un poussoir (25) dont la première face frontale donne sur la plaque d'actionnement (18) et sa deuxième face frontale sur un des boutons (5).

10. Commutateur d'après la revendication 8,
**caractérisé en ce que**
sur les deux faces frontales de la gorge de guidage (11) perpendiculaires à l'axe longitudinal (6) de la plaque de support (3), il est formé respectivement une came (26) qui saille dans la gorge de guidage (11), et que sur l'élément de transmission (16), il est prévu deux tétons d'actionnement (27) donnant sur les cames (26) et qui, en état monté, sont orientés en alignement précis avec celles-ci, par lesquels, lors du déplacement linéaire de la plaque d'actionnement (18), la came respective (26) est déplacée axialement en direction d'un des boutons (5).

11. Commutateur d'après une des revendications précédentes,
**caractérisé en ce que**
à côté de la gorge de guidage (11) et parallèlement à celle-ci, il est pratiqué dans la plaque de support (3) respectivement une fente de guidage (41), dans laquelle il est monté respectivement un élément de barrage (28) sous la forme de bascule, et que moyennant un boulon (29), l'élément de barrage (28) est retenu pivotant sur la plaque de support (3).

12. Commutateur d'après la revendication 11,
**caractérisé en ce que**
dans les deux éléments de barrage (28), il est pratiqué respectivement une fente (31) orientée vers la plaque d'actionnement (18), dans laquelle il est inséré un goujon de guidage (32), et que sur la surface de la plaque d'actionnement (18) donnant sur le plaque de support (3), il est formé deux joues (34) opposées et parallèles l'une par rapport à l'autre, dans lesquelles il est pratiqué parallèlement à l'axe longitudinal (6) de la plaque d'actionnement (18) une gorge de guidage (35), qu'en état monté, les éléments de barrage (28) sont insérés dans respectivement une des gorges de guidage (35) et que dans les deux joues (34), il est pratiqué un évidement trapézoïdal (36) dont le contour intérieur est plus grand que le contour extérieur des éléments de barrage (28).

13. Commutateur d'après la revendication 12,
**caractérisé en ce que**
dans la plaque de support (3), il est pratiqué, en alignement précis avec les deux gorges de guidage (35) des joues (34), respectivement une fente (41) dans lesquelles s'insèrent les éléments de barrage (28) en dépendance du sens de déplacement de l'élément de commande (4).

14. Commutateur d'après une des revendications précédentes,
**caractérisé en ce que**
dans la gorge de guidage de guidage (11), il est inséré deux chariots de guidage fixes (13), et que dans ceux-ci, il est pratiqué respectivement deux canaux de guidage (12) orientés parallèlement à l'axe longitudinal (6), dans lesquels est inséré et retenu de manière déplaçable l'élément de transmission (16),

15. Commutateur d'après la revendication 14,
**caractérisé en ce que**
sur l'élément de transmission (16), il est formé un collet (14) aligné perpendiculairement à l'axe longitudinal (6) de la plaque de support (3), sur lequel portent deux ressorts de pression (15) parallèlement à l'axe longitudinal (6) de la plaque de support (3), qui s'appuient sur celui-ci, et que les ressorts de pression (15) serrent l'élément de transmission (16) entre le collet (14) et l'extrémité respective de la plaque de support (3).

16. Commutateur d'après une des revendications précédentes,
**caractérisé en ce que**
les boutons respectifs (5) sont raccordés électriquement à un circuit électrique (7) et que les signaux de commande transmis par les boutons (5) sont reçus par le circuit électrique (7) et transmis à un dispositif d'entraînement (4), de préférence un moteur électrique servant au réglage d'un siège (8, 9, 10) d'un véhiculé.

17. Commutateur d'après une des revendications précédentes,
**caractérisé en ce que**
l'élément de commande (4) se laisse déplacer sur six positions de commande différentes, qu'à chaque position de commande, il est assigné un bouton (5) et qu'a l'atteinte d'une des six positions de commande, le déplacement de l'élément de commande vers les autres positions de commande est bloqué.
